Europäisches Patentamt

European Patent Office

Office européen des brevets

(19)

(11) Veröffentlichungsnummer: **0 104 516 B1**

(12) **EUROPÄISCHE PATENTSCHRIFT**

(45) Veröffentlichungstag der Patentschrift:
30.03.88

(51) Int. Cl.⁴: **C 09 C 1/00**

(21) Anmeldenummer: **83108848.9**

(22) Anmeldetag: **08.09.83**

(54) **Perlglanzpigmente.**

(30) Priorität: **22.09.82 DE 3235017**

(43) Veröffentlichungstag der Anmeldung:
**04.04.84 Patentblatt 84/14**

(45) Bekanntmachung des Hinweises auf die Patenterteilung:
**30.03.88 Patentblatt 88/13**

(84) Benannte Vertragsstaaten:
**BE CH DE FR GB IT LI NL**

(56) Entgegenhaltungen:
**FR - A - 1 326 901
US - A - 3 331 699
US - A - 3 342 617
US - A - 3 832 208
US - A - 4 134 776**

**Die Akte enthält technische Angaben, die nach dem Eingang der Anmeldung eingereicht wurden und die nicht in dieser Patentschrift enthalten sind.**

(73) Patentinhaber: **Merck Patent Gesellschaft mit beschränkter Haftung, Frankfurter Strasse 250, D-6100 Darmstadt (DE)**

(72) Erfinder: **Franz, Klaus-Dieter, Dr., Industriestrasse 10, D-6233 Kelkheim (DE)**
Erfinder: **Ambrosius, Klaus, Dr., Bergerstrasse 102, D-6000 Frankfurt (DE)**
Erfinder: **Esselborn, Reiner, Dr., Küchlerstrasse 6, D-6100 Darmstadt (DE)**
Erfinder: **Kieser, Manfred, Dr., Händelstrasse 39, D-6100 Darmstadt (DE)**

## Beschreibung

Die Erfindung betrifft Perlglanzpigmente mit verbesserter Witterungsstabilität auf der Basis von mit Metalloxiden beschichteten Glimmerschuppen, die mit einer stabilisierenden, chromhaltigen Nachbeschichtung versehen sind.

Es ist bekannt, dass Kunststoffe oder Lacke, in die Perlglanzpigmente eingearbeitet sind, witterungsbedingte Veränderung erfahren. Insbesondere wird auch durch die kombinierte Einwirkung von UV-Strahlung und Feuchtigkeit durch den katalytischen Einfluss der meist mit TiO$_2$-beschichteten Glimmerplättchen die Polymermatrix, in die die Pigmente eingebettet sind, zerstört.

Stabilitätsverbessernde Beschichtungen für reine Titandioxidpigmente sind in der Literatur beschrieben, so zum Beispiel in dem Buch «Titanium» von J. Barksdale, Ronald-Press 1966. Die dort beschriebenen Beschichtungen reichen aber nicht aus, um den komplizierter aufgebauten TiO$_2$-haltigen Glimmerbeschichtungen genügend Stabilität zu verleihen.

Zur Verbesserung der Stabilität bei mit TiO$_2$-beschichteten Glimmerpigmenten wurde vorgeschlagen, eine Nachbeschichtung mit Chromverbindungen durchzuführen. So werden in der deutschen Offenlegungsschrift 22 15 191 TiO$_2$-beschichtete Glimmerpigmente beschrieben, die zusätzlich mit Methacrylatochromchlorid überzogen sind und die eine verbesserte Witterungsbeständigkeit zeigen. In der deutschen Offenlegungsschrift 28 52 585 werden mit TiO$_2$-beschichtete Glimmerpigmente beschrieben, die durch eine zusätzliche Beschichtung mit Chromhydroxid in ihrer Witterungsbeständigkeit verbessert wurden.

Die so nachbehandelten Pigmente haben jedoch den Nachteil, dass die zur Erzielung einer ausreichenden Wirkung notwendigen Mengen der Chromverbindungen durch ihre starke grau-grüne bzw. grüne Eigenfarbe den Glanz und die Farbqualität der Pigmente stark negativ beeinflussen.

Es bestand deshalb die Aufgabe, Pigmente mit verbesserter Witterungsstabilität bereitzustellen, die diese Nachteile nicht besitzen, sondern auch nach der Nachbeschichtung guten Glanz und reine Farben besitzen.

Es wurde nun gefunden, dass eine farbneutrale witterungsbeständige Beschichtung unter Erhaltung des Glanzes und der Farbwerte erreicht werden kann, wenn die zu stabilisierenden Pigmente mit einer Kombination von Metallverbindungen beschichtet werden, wobei die Pigmente sowohl mit einer Chromverbindung als auch mit einer Eisen- und/oder Manganverbindung nachbeschichtet werden.

Gegenstand der Erfindung sind daher Perlglanzpigmente mit verbesserter Witterungsstabilität auf der Basis von mit Metalloxiden beschichteten Glimmerschuppen, die mit einer stabilisierenden, chromhaltigen Nachbeschichtung versehen sind, die dadurch gekennzeichnet sind, dass die Nachbeschichtung aus einer Kombination von Metallsalzen besteht, wobei Eisen und/oder Mangan in Form des Hydroxids, Carbonats oder Phosphats und Chrom in Form des Hydroxids, Carbonats, Phosphats oder als Methacrylatochromchlorid auf den Ausgangspigmenten abgeschieden sind.

Gegenstand der Erfindung ist auch ein Verfahren zur Herstellung dieser Pigmente, das dadurch gekennzeichnet ist, dass man zu einer wässerigen Suspension eines mit Metalloxid beschichteten Glimmerschuppenpigments bei einem pH-Wert zwischen 2 und 8 Eisen und/oder Mangan sowie Chrom in Form von Salzlösungen zugibt und auf den Glimmerschuppenpigmenten niederschlägt, diese dann abtrennt und trocknet.

In der FR-A-13 26 901 werden Metalloxid/Glimmer-Pigmente beschrieben, wobei auf eine erste Schicht von z.B. TiO$_2$ noch eine zweite Schicht eines anderen Metalloxids aufgebracht werden kann. Genannt werden dabei sowohl ungefärbte Metalloxide wie die Oxide des Aluminium, Zirkonium, Zink, Zinn, Antimon und Titan, als auch gefärbte Oxide wie die des Eisen, Nickel, Kobalt, Kupfer und Chrom. Es wird auch erwähnt, dass die zweite Schicht auch Mischungen dieser Metalloxide enthalten kann. Ein Hinweis darauf, dass speziell mit einer Nachbeschichtung aus einer Kombination von Eisen und/oder Mangan in Form des Hydroxids, Carbonats oder Phosphats und Chrom in Form des Hydroxids, Carbonats, Phosphats oder Methacrylatochlorids besonders vorteilhafte Effekte erzielt werden, kann dieser Publikation jedoch nicht entnommen werden.

Als Ausgangsmaterial für die Herstellung der erfindungsgemässen Pigmente eignen sich im Prinzip alle üblichen mit Metalloxiden beschichtete Glimmerpigmente, vorzugsweise werden jedoch mit Titandioxid beschichtete Glimmerpigmente verwendet. Bei den als Basispigmente verwendeten Glimmerschuppenpigmenten handelt es sich in der Regel um Glimmerschuppen mit einem Durchmesser von etwa 5–200 μm und einer Dicke von etwa 0,1–5 μm, die mit einer Metalloxidschicht überzogen sind. Als Metalloxidüberzüge werden wegen des vorteilhaften Brechungsindex hauptsächlich Titandioxid bzw. Titandioxidaquate und/oder Zirkondioxid bzw. Zirkondioxidaquate verwendet. Zusammen mit diesen Metalloxiden oder alternativ dazu können jedoch auch andere farblose oder gegebenenfalls auch farbige Metalloxide, wie z.B. SnO$_2$, Al$_2$O$_3$ oder Fe$_2$O$_3$ verwendet werden. Ein besonders häufig eingesetztes Pigment ist z.B. ein Glimmerschuppenpigment, bei dem Glimmerschuppen mit einem Durchmesser von etwa 5–50 μm und einer Dicke von etwa 0,5 μm gleichmässig mit einer gegebenenfalls hydratisierten Titandioxidschicht beschichtet sind, wobei die Glimmeroberfläche eine TiO$_2$-Schicht von etwa 50–500 mg TiO$_2$ pro m$^2$ trägt. Diese Perlglanzpigmente besitzen je nach der Schichtdicke der aufgefällten Metalloxidschicht verschiedene Interferenzfarben. In der Regel handelt es sich um Produkte, die bei höheren Temperaturen von etwa 600–1000 °C kalziniert sind. Alle diese Pigmente sind bekannt und z.B. in den deutschen Patentschriften 14 67 468, 19 59 998 und 20 09 556 und den deutschen Offenlegungsschriften 20 60 850,

21 06 613, 22 14 545, 22 15 191, 22 44 298, 23 13 331, 23 13 332, 24 29 762, 25 22 572, 25 22 573 und 26 28 353 beschrieben. Besonders bevorzugte Ausgangsmaterialien sind die nach den deutschen Offenlegungsschriften 22 14 545 oder 25 22 572 herstellbaren Glimmerpigmente mit einer $TiO_2$-Beschichtung in der Rutilmodifikation.

Zur erfindungsgemässen Nachbeschichtung werden diese Pigmente in Wasser suspendiert. Die zur Abscheidung kommenden Metallen können dann in Form von Salzlösungen zugefügt werden und durch ein geeignetes Fällungsmittel wie z.B. eine Base oder ein geeignetes Anion auf die Pigmente aufgefällt werden. Vorzugsweise geht man dabei so vor, dass man eine oder mehrere Lösungen, die die Metalle in Form eines gelösten Salzes oder Komplexes enthalten, langsam zu der wässerigen Suspension des Ausgangspigmentes zugibt, wobei gleichzeitig das Fällungsmittel zudosiert wird. Die Fällung wird bei einem pH-Wert von etwa 2–8, vorzugsweise etwa 4–7 vorgenommen, der während der Beschichtung weitgehend konstant gehalten wird. Welcher pH-Wert dabei gewählt wird, hängt im wesentlichen davon ab, in welcher Form die Metalle ausgefällt werden sollen. Geeignete Fällungsformen sind die Hydroxide, die Carbonate und die Phosphate, für das Chrom auch der Methacrylatokomplex. Für die besonders bevorzugte Fällung als Phosphat wird die Suspension auf einen pH-Wert von vorzugsweise etwa 4–7 eingestellt.

Als Metallsalze können im Prinzip alle wasserlöslichen Salze verwendet werden. Bevorzugt sind insbesondere die Chloride und die Sulfate. Im Falle von Eisen ist das $FeSO_4$ besonders bevorzugt.

Da die der Suspension zuzufügenden Metallsalzlösungen in der Regel stark sauer sind, wird der pH-Wert der Suspension während der Fällung durch gleichzeitige Zugabe von Basen weitgehend konstant gehalten. Dazu kann an sich jede anorganische oder organische Base verwendet werden, die die Produkte nicht negativ beeinflusst. Geeignet sind z.B. Ammoniak (in Lösung oder gasförmig), Natronlauge oder Kalilauge.

Falls die Metalle als Hydroxide gefällt werden, dient die Base gleichzeitig als Fällungsmittel. Bei der Fällung als Carbonat oder Phosphat wird das entsprechende Anion gleichzeitig mit der Lösung der Metallsalze und der Base zudosiert. Besonders bevorzugt wird eine Fällung als Phosphat vorgenommen, wobei gleichzeitig Alkaliphosphate wie z.B. $NaH_2PO_4$ zugegeben werden. Vorzugsweise werden diese Fällungsmittel in einem Überschuss zugefügt, der z.B. etwa 20% der theoretischen Menge betragen kann.

Die Nachbeschichtung wird vorzugsweise bei leicht erhöhter Temperatur von etwa 30–70 °C durchgeführt, insbesondere bei etwa 40–50 °C. Bei der Beschichtung mit Methacrylatochromchlorid wird vorzugsweise bei einer Temperatur von etwa 40 °C gearbeitet.

Die zur Beschichtung verwendeten Metallverbindungen werden in solchen Mengen eingesetzt, dass die Nachbeschichtung etwa 0,1–10 Gew.-%

des gesamten Glimmerpigments ausmacht. Bevorzugt werden etwa 0,2–5 Gew.-%. Die erfindungsgemässe Nachbeschichtung enthält in jedem Fall einen Anteil einer Chrom(III)-Verbindung. In der Regel besteht die Nachbeschichtung zu etwa 20 bis etwa 80 Gew.-% aus der Chromverbindung, vorzugsweise zu etwa 40 bis etwa 60 Gew.-%.

Eisen- und Manganverbindungen, die sowohl in der zweiwertigen als auch der dreiwertigen Form eingesetzt werden können, können gemeinsam den Restanteil der Nachbeschichtung ausmachen, wobei beliebige Mischungsverhältnisse möglich sind. In der Regel wird jedoch aus Gründen der Praktikabilität neben Chrom nur eine weitere Metallverbindung für die Nachbeschichtung benutzt.

Die Metallverbindungen können gemeinsam aufgefällt werden, sodass eine weitgehend homogene Verteilung in der Nachbeschichtung vorliegt. Es können jedoch auch die verschiedenen Metallverbindungen nacheinander zur Abscheidung gebracht werden. Bevorzugt werden die Metallverbindungen gemeinsam abgeschieden.

Wenn die Nachbeschichtung abgeschlossen ist, wird das Pigment in der Regel noch eine kurze Zeit unter Rühren in der Suspension belassen, danach in üblicher Weise abgetrennt, gegebenenfalls noch salzfrei gewaschen und dann bei Temperaturen von etwa 80–150 °C getrocknet. Eine Kalzinierung findet nicht mehr statt.

Die Pigmente sind danach für alle üblichen Verwendungen brauchbar. Insbesondere geeignet sind sie für solche Anwendungen, bei denen sie in Farben, Lacke oder Kunststoffe zum Gebrauch im Freien eingearbeitet werden.

Beispiel 1

Eine Suspension von 100 g eines silbernen Rutil-Glimmerpigmentes (hergestellt nach Beispiel 2 der DOS 25 22 572) in 1 l Wasser wird bei einem pH-Wert von 4,5 und einer Temperatur von 50 °C innerhalb einer Stunde mit 100 ml einer wässerigen Lösung, die 0,92 g $FeSO_4 \cdot 7 H_2O$ und 1,7 g $KCr(SO_4)_2 \cdot 12 H_2O$ enthält und mit 100 ml einer wässerigen Lösung die 1,5 g $NaH_2PO_4 \cdot 2 H_2O$ enthält, versetzt, wobei der pH-Wert durch gleichzeitige Zugabe von 2%iger Natronlauge konstant gehalten wird. Danach wird der pH-Wert auf 5,0 angehoben und es wird noch 1 Stunde nachgerührt, dann abfiltriert, mit Wasser gewaschen und bei 130 °C getrocknet. Man erhält ein weiches agglomeratfreies, dicht belegtes Pigment mit gegenüber dem Ausgangspigment nahezu unverändertem Glanz und Farbton. Die Nachbeschichtung macht etwa 1% des Gesamtpigments aus.

Ein Bewitterungstest zeigt, dass das erfindungsgemäss nachbeschichtete Pigment dem Ausgangspigment deutlich überlegen ist.

Beispiel 2

Beispiel 1 wird wiederholt, wobei jedoch an Stelle von $FeSO_4 \cdot 7 H_2O$ die äquivalente Menge $MnSO_4 \cdot H_2O$ eingesetzt wird. Auch hier erhält man ein Pigment mit einer etwa 1%igen Nachbeschichtung, das im Glanz und Farbton dem Ausgangspigment entspricht, in der Witterungsstabilität jedoch deutlich überlegen ist.

Beispiel 3

Eine Suspension von 100 g eines mit Rutilbeschichteten Glimmerpigmentes mit gelber Interferenzfarbe (hergestellt nach Beispiel 2 der DOS 25 22 572), in 1 l Wasser wird bei einem pH-Wert von 4,5 und einer Temperatur von 40 °C innerhalb einer Stunde mit 100 ml einer wässerigen Lösung, die 1,5 g $FeSO_4 \cdot 7 H_2O$ und 0,5 g Methacrylatochromchlorid enthält und mit 100 ml einer wässerigen Lösung die 1,5 g $NaH_2PO_4 \cdot 2 H_2O$ enthält, versetzt, wobei der pH-Wert durch gleichzeitige Zugabe von 2%iger Natronlauge konstant gehalten wird. Danach wird der pH-Wert auf 5,0 angehoben und es wird noch 1 Stunde nachgerührt, danach abfiltriert, mit Wasser gewaschen und bei 120 °C getrocknet. Man erhält ein weiches agglomeratfreies dicht belegtes Pigment, das deutlich witterungsstabiler ist als das Ausgangspigment und das mit etwa 1% der erfindungsgemässen Nachbeschichtung versehen ist.

Beispiel 4

Beispiel 3 wird wiederholt, wobei jedoch an Stelle von $FeSO_4 \cdot 7 H_2O$ die äquivalente Menge an $MnSO_4 \cdot H_2O$ eingesetzt wird. Auch hier erhält man ein Pigment mit deutlich verbesserter Witterungsstabilität und etwa 1% Nachbeschichtung.

**Patentansprüche**

1. Perlglanzpigmente mit verbesserter Witterungsstabilität auf der Basis von mit Metalloxiden beschichteten Glimmerschuppen, die mit einer stabilisierenden, chromhaltigen Nachbeschichtung versehen sind, dadurch gekennzeichnet, dass die Nachbeschichtung aus einer Kombination von Metallsalzen besteht, wobei Eisen und/oder Mangan in Form des Hydroxids, Carbonats oder Phosphats und Chrom in Form des Hydroxids, Carbonats, Phosphats oder als Methacrylatochromchlorid auf den Ausgangspigmenten abgeschieden sind.

2. Perlglanzpigmente nach Anspruch 1, dadurch gekennzeichnet, dass die Nachbeschichtung 0,1–10% des Pigmentgewichts ausmacht.

3. Perlglanzpigmente nach Anspruch 1 oder 2, dadurch gekennzeichnet, dass der Anteil der Chromverbindung an der Nachbeschichtung etwa 20 bis etwa 80 Gew.-% ausmacht.

4. Perlglanzpigmente nach einem der Ansprüche 1 bis 3, dadurch gekennzeichnet, dass die Metalle in Form der Phosphate vorliegen.

5. Perlglanzpigmente nach einem der Ansprüche 1 bis 3, dadurch gekennzeichnet, dass das Eisen und/oder Mangan in Form des Phosphats vorliegt und das Chrom als Methacrylatochromchlorid.

6. Verfahren zur Herstellung der Perlglanzpigmente nach Anspruch 1, dadurch gekennzeichnet, dass man zu einer wässerigen Suspension eines mit Metalloxiden beschichteten Glimmerschuppenpigments bei einem pH-Wert zwischen 2 und 8 Eisen und/oder Mangan sowie Chrom in Form von Salzlösungen zugibt und auf den Glimmerschuppenpigmenten niederschlägt, diese dann abtrennt und trocknet.

7. Verfahren nach Anspruch 6, dadurch gekennzeichnet, dass der pH-Wert weitgehend konstant bei 4–7 gehalten wird.

8. Verfahren nach Anspruch 6 oder 7, dadurch gekennzeichnet, dass die Fällung der Metallsalze gemeinsam erfolgt.

9. Verfahren nach einem der Ansprüche 6 bis 8, dadurch gekennzeichnet, dass die Fällung der Metallsalze durch gleichzeitige Zugabe einer Alkaliphosphatlösung erfolgt.

10. Verfahren nach einem der Ansprüche 6 bis 9, dadurch gekennzeichnet, dass die Fällung bei einer Temperatur von etwa 30–70 °C durchgeführt wird.

**Claims**

1. Nacreous pigments which have an improved stability to weathering and are based on mica flakes coated with metal oxides and provided with a stabilising, chromium-containing second coating, characterised in that the second coating consists of a combination of metal salts, with iron and/or manganese being deposited on the starting pigments in the form of the hydroxide, carbonate or phosphate and chromium being deposited on the starting pigments in the form of the hydroxide, carbonate or phosphate or as methacrylato-chromium chloride.

2. Nacreous pigments according to Claim 1, characterised in that the second coating makes up 0.1–10% of the pigment weight.

3. Nacreous pigments according to Claim 1 or 2, characterised in that the content of chromium compound in the second coating is about 20 to about 80% by weight.

4. Nacreous pigments according to one of Claims 1 to 3, characterised in that the metals are in the form of the phosphates.

5. Nacreous pigments according to one of Claims 1 to 3, characterised in that the iron and/or manganese is in the form of the phosphate and the chromium is in the form of methacrylato-chromium chloride.

6. Process for the preparation of the nacreous pigments according to Claim 1, characterised in that iron and/or manganese and chromium are added, in the form of salt solutions and at a pH value of between 2 and 8, to an aqueous suspension of a mica flake pigment coated with metal oxides and are precipitated on the mica flake pigments and these are then separated off and dried.

7. Process according to Claim 6, characterised in that the pH value is kept substantially constant at 4–7.

8. Process according to Claim 6 or 7, characterised in that the metal salts are precipitated together.

9. Process according to one of Claims 6 to 8, characterised in that the metal salts are precipitated by simultaneous addition of an alkali metal phosphate solution.

10. Process according to one of Claims 6 to 9, characterised in that the precipitation is carried out a temperature of about 30–70 °C.

## Revendications

1. Pigments nacrés à stabilité aux intempéries améliorée à base de paillettes de mica revêtues d'oxydes métalliques qui sont munis d'un revêtement supplémentaire stabilisant contenant du chrome, caractérisés en ce que le revêtement supplémentaire est constitué d'une combinaison de sels métalliques, en précipitant sur les pigments de départ le fer et/ou le manganèse sous forme de l'hydroxyde, du carbonate ou du phosphate et le chrome sous forme de l'hydroxyde, du carbonate, du phosphate ou de chlorure de méthacrylatochrome.

2. Pigments nacrés selon la revendication 1, caractérisés en ce que le revêtement supplémentaire représente 0,1–10% du poids du pigment.

3. Pigments nacrés selon la revendication 1 ou 2 caractérisés en ce que la teneur en composé du chrome du revêtement supplémentaire en constitue d'environ 20 à environ 80% en poids.

4. Pigments nacrés selon l'une des revendications 1 à 3 caractérisés en ce que les métaux se présentent sous forme des phosphates.

5. Pigments nacrés selon l'une des revendications 1 à 3 caractérisés en ce que le fer et/ou le manganèse se présentent sous forme du phosphate et le chrome sous forme de chlorure de méthacrylatochrome.

6. Procédé de préparation de pigments nacrés selon la revendication 1, caractérisé en ce qu'à une suspension aqueuse d'un pigment de paillettes de mica revêtues d'oxydes métalliques et à un pH compris entre 2 et 8 on ajoute du fer et/ou manganèse ainsi que du chrome sous forme de solutions salines et qu'on les précipite sur les pigments de paillettes de mica, les sépare ensuite et les sèche.

7. Procédé selon la revendication 6, caractérisé en ce qu'on maintient le pH sensiblement constant entre 4 et 7.

8. Procédé selon la revendication 6 ou 7, caractérisé en ce qu'on réalise simultanément la précipitation des sels métalliques.

9. Procédé selon l'une des revendications 6 à 8 caractérisé en ce que la précipitation des sels métalliques a lieu par addition simultanée d'une solution d'un phosphate alcalin.

10. Procédé selon l'une des revendications 6 à 9 caractérisé en ce que la précipitation est réalisée à une température d'environ 30–70 °C.